# EUROPÄISCHE PATENTSCHRIFT

(11) **EP 0 669 511 B1**
(45) Veröffentlichungstag und Bekanntmachung des Hinweises auf die Patenterteilung: **27.05.1998**
(21) Anmeldenummer: 94810119.1
(22) Anmeldetag: 25.02.1994
(51) Int. Cl.: F28C 1/00

(54) **Vorrichtung zum Kühlen von Wasser im Gegenstrom**
Apparatus for cooling water in counter flow
Dispositif pour refroidir de l'eau à contre-courant

(43) Veröffentlichungstag der Anmeldung: 30.08.1995
(73) Patentinhaber: SULZER-ESCHER WYSS GmbH, 88131 Lindau (DE)
(72) Erfinder: Niessen, Roland Bernhard Michael, D-88131 Lindau (DE)
(74) Vertreter: Heubeck, Bernhard

(56) Entgegenhaltungen:
- DE-A- 2 212 387
- DE-A- 2 659 767
- DE-A- 4 105 385

## Beschreibung

Die Erfindung betrifft eine Vorrichtung zum Kühlen von Wasser im Gegenstrom nach dem ersten Teil des Anspruchs 1. Eine derartige Vorrichtung ist nach der DE-A-2212 387 bekannt.

Mit Kühltürmen, die nach dem Verdunstungsprinzip arbeiten, kann eine möglichst niedrige Temperatur des Kühlwassers auf wirtschaftlichste Weise erreicht werden, wobei das Wasser im Kreislauf geführt wird und der Wasserverbrauch sich auf Verdunstungsverluste und andere geringe Betriebsverluste beschränkt. Vergleicht man die Wasserverluste eines Verdunstungskühlturms mit denen der Durchlaufkühlung, bei der Grund- oder Oberflächenwasser nur einmal genutzt werden kann, ist der Wasserverbrauch von Kühltürmen gering.

Um eine möglichst gute Wirkung der Verdunstungskühlung zu erreichen, ist es notwendig Wasser und Umgebungsluft möglichst gleichmässig über dem ganzen Kühlturmquerschnitt in Kontakt zu bringen.

Dabei ist darauf zu achten, dass die Luftzahl λ, das ist das Verhältnis der einströmenden Menge von trockener Luft zu der Menge des Wassers, als lokale Grösse möglichst konstant über dem Kühlturmquerschnitt verteilt ist.

Durch geeignete Massnahmen in der Wasserverteileinrichtung gelingt es, auf unterschiedliche Art und Weise, den Wasserstrom über dem Kühlturmquerschnitt gleichmässig zu verteilen.

Um ein möglichst konstantes Verhältnis von Luft- zu Wasserstrom über dem Kühlturmquerschnitt zu erhalten, muss die Verteilung der Luftmenge im Kühlturm je nach Kühlturmtyp auf unterschiedliche Art und Weise bewerkstelligt werden.

Bei Kühltürmen mit saugseitig angeordneten Ventilatoren strömt die Luft durch Eintrittsöffnungen in den Kühlturm, die in der Regel im unteren Teil des Gehäuses gleichmässig am Umfang verteilt sind. Dadurch kommt es bei sonst ungestörten Anströmbedingungen zu einer weitgehend symmetrischen Luftverteilung im Kühlturmquerschnitt.

Bei Seitenwind kann es zu Störungen in der Luftverteilung kommen, dadurch wird die lokale Luftzahl stärkeren Schwankungen unterworfen, was letzten Endes eine verminderte Kühlleistung des Kühlturms zur Folge hat, wenn man die Leistung mit dem theoretisch möglichen Wert vergleicht.

Bei Kühltürmen mit druckseitig angeordneten Ventilatoren wird meist die zur Kühlung erforderliche Luftmenge mit Hilfe eines Gebläses an einer relativ zum Kühlturmquerschnitt kleinen Eintrittsöffnung in den Kühlturm gefördert. Dabei werden Ventilatoren in Axialbauweise oder Radialbauweise verwendet.

Eine gleichmässige Luftverteilung wird dabei nur mit erhöhtem Aufwand erreicht. Dabei werden üblicherweise Leitvorrichtungen im Anströmbereich des Füllkörpers verwendet, um die Luft in Längsrichtung des Kühlturms gleichmässig zu verteilen.

Um eine gleichmässige Verteilung der Kühlluft quer zur Einblasrichtung erzielen zu können, darf die Breite des Kühlturms, bezogen auf die Ventilatorbreite, nicht zu gross werden. Deshalb ist es oft notwendig bei grösseren Kühltürmen die Länge des Kühlturms mehr als doppelt so gross wie seine Breite auszuführen. Werden grosse Kühlturmflächen benötigt, ist die Anordnung mehrerer parallel angeordneter Einheiten sinnvoll.

Die Ventilatoren sind oft die herausragenden Schallquellen eines Kühlturms und müssen deshalb bei schalltechnischen Anforderungen an den Kühlturm besonders schallgedämpft werden.

Radialventilatoren werden verwendet, wenn besonders hohe Anforderungen bezüglich der Schallemission an den Kühlturm gestellt werden. Bedingt durch die Bauweise des Ventilators ist es erforderlich für die Anbringung von Schalldämmkulissen eine Kammer zu errichten, die die Ventilatoren umgibt und die mindestens an einer Seite eine Oeffnung aufweist, durch die die Luft zu den Ventilatoren strömen kann.

Der Querschnitt der Oeffnung wird mit schalldämpfenden Kulissen ausgerüstet, so dass nur noch ein Teil des erzeugten Geräusches durch diese Oeffnung gelangen kann.

Die so gestaltete Ventilatorkammer kann bei Kühltürmen, deren Länge mehr als das Doppelte der Breite beträgt, Abmessungen annehmen die denen des Kühlturms gleichkommen.

Die Ventilatorkammer wird bei einem Radialventilator mit axialer Einströmfläche ebenfalls erforderlich, wenn die Luft über Kanäle oder Schächte an den Kühlturm herangeführt werden muss. Dies ist besonders in der Gebäudetechnik eine weitverbreitete Lösung. Dabei muss die Kammer so gestaltet werden, dass der Abstand der Kammerwand von den seitlichen Lufteintrittsöffnungen des Ventilators genügend gross ist, um die Luftströmung nicht mehr als notwendig zu behindern.

Die DE-A-2 212 387 offenbart einen Kühlturm mit Zwangsbelüftung durch einen Querstromventilator, wobei der Ventilator innerhalb des Gehäuses angeordnet ist und die Luft durch eine Ansaugöffnung in der Gehäuseseitenwand radial angesaugt und durch die Ventilatorschaufeln ausgeblasen wird. Es ist ein Warmwasserzulaufrohr 6 vorgesehen aus dem Wasser auf die Schaufeln geleitet wird. Es wird ein Luft-Wassergemisch erzeugt, das aufwärts zu Einbauten geleitet wird, sodass Wassertropfen ausgeschieden werden.

Als Nachteil erweist sich der Einbau des Ventilators im Gehäuse, der eine willkürliche Verteilung des Luft-Wassergemisches bewirkt.

Der Erfindung liegt die Aufgabe zugrunde, eine Vorrichtung zum Kühlen von Wasser im Gegenstrom zu schaffen, die eine optimale Luftverteilung und damit eine höhere Kühlleistung aufweist.

Die Aufgabe wird erfindungsgemäss durch die Merkmale des Anspruches 1 gelöst. Durch die Anordnung des Querstromventilators außerhalb des Gehäuses an einer Seitenwand wird eine optimale Luftverteilung erreicht.

Durch verminderte Druckverluste im Eintrittsbereich von Kühlturm und Ventilator ist der Leistungsbedarf des Ventilators bei gleicher Luftmenge kleiner als bei den bekannten Radialventilatoren mit axialer Einströmung.

Bei schalltechnischen Anforderungen besonderer Art, die zu schalldämpfenden Massnahmen führen, ist eine besonders einfache Ausführung möglich. Hier kann auf die zum Teil recht grosse Ventilatorkammer verzichtet werden, da der direkte Anschluss von Luftkanälen mit Schalldämpferkulissen möglich ist. Diese Kanäle können durch Gebäudedecken oder -wände geführt werden, so dass einer Aufstellung des Kühlturms im Innern von Gebäuden nichts entgegensteht. Ebenso ist die Anbringung einer mit schallabsorbierendem Material ausgerüsteten Schallschluckhaube mit seitlicher Oeffnung möglich.

Die Erfindung wird anhand der beigefügten Zeichnungen erläutert.

Es zeigen:
- Fig. 1: einen Längsschnitt durch eine Ausführungsform einer erfindungsgemässen Vorrichtung;
- Fig. 2: eine teilweise aufgebrochen dargestellte Draufsicht der Vorrichtung gemäss Fig. 1;
- Fig. 3: einen Längsschnitt durch eine andere Ausführungsform einer erfindungsgemässen Vorrichtung;
- Fig. 4: einen Längsschnitt durch eine weitere Ausführungsform einer erfindungsgemässen Vorrichtung;
- Fig. 5: einen Schnitt durch eine Schalldämpfereinheit.

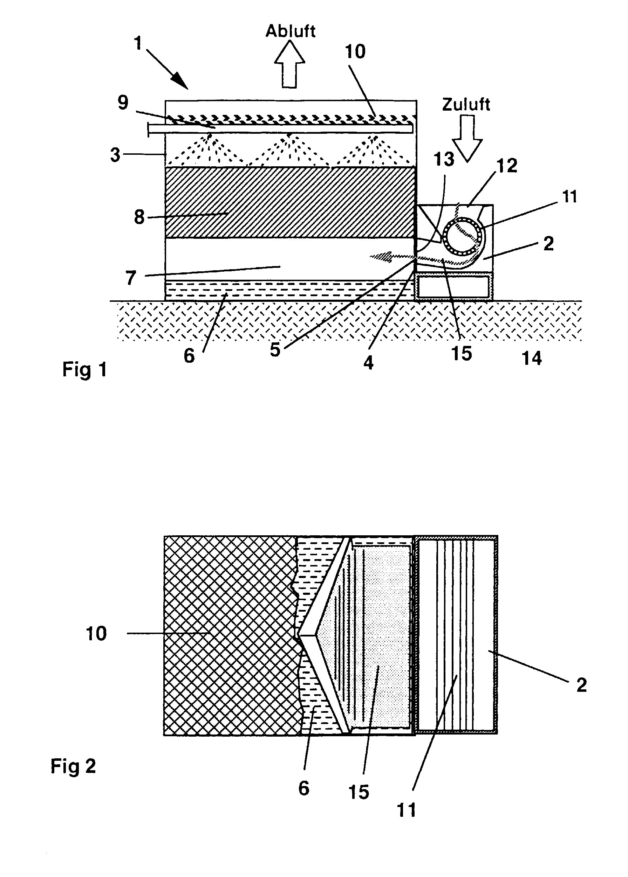

Wie die Fig. 1 zeigt, besteht die Vorrichtung im wesentlichen aus einem Kühlturm 1 und einem Querstromventilator 2. Der Kühlturm 1 hat ein Gehäuse 3, das oben offen ist und in einer Seitenwand 4 eine Lufteinlassöffnung 5 zum Zuführen der Kühlluft aufweist. Der Kühlturm 1 enthält ferner eine Wasserauffangwanne 6, einen Anströmbereich 7, in dem die Luft nach oben umgelenkt wird, Kühleinbauten 8, die oberhalb des Anströmbereichs angeordnet sind, eine Wasserverteileinrichtung 9, die mit einer nicht dargestellten Speisequelle verbunden ist und eine Einrichtung 10 zur Abscheidung von mitgerissenen Wassertropfen.

Der Querstromventilator 2 weist einen Rotor 11, eine Lufteintrittsöffnung 12 und eine Luftaustrittsöffnung 13 auf. Der Ventilator 2 ist auf einem Sockel 14 montiert, so dass die Lufteintrittsöffnung 12 nach oben gerichtet ist und die Luftaustrittsöffnung 13 mit der Lufteinlassöffnung 5 des Gehäuses 3 verbunden ist, um die Luft im Anströmbereich des Füllkörpers 7 in das Gehäuse 3 einzublasen. Dabei durchströmt die Luft den Ventilator in radialer Richtung und erfährt eine durch einen Pfeil 15 angegebene Umlenkung.

Der Rotor 11 hat eine Länge die nahezu gleich der Länge der Seitenwand 4 des Gehäuses ist. Dadurch werden erfindungsgemäss im Eintrittsbereich des Kühlturmes die Stossverluste sehr stark vermindert und die Luft kann über die gesamte Gehäusebreite gleichmässig in die Kühlturmeinbauten 8 strömen (Fig. 2).

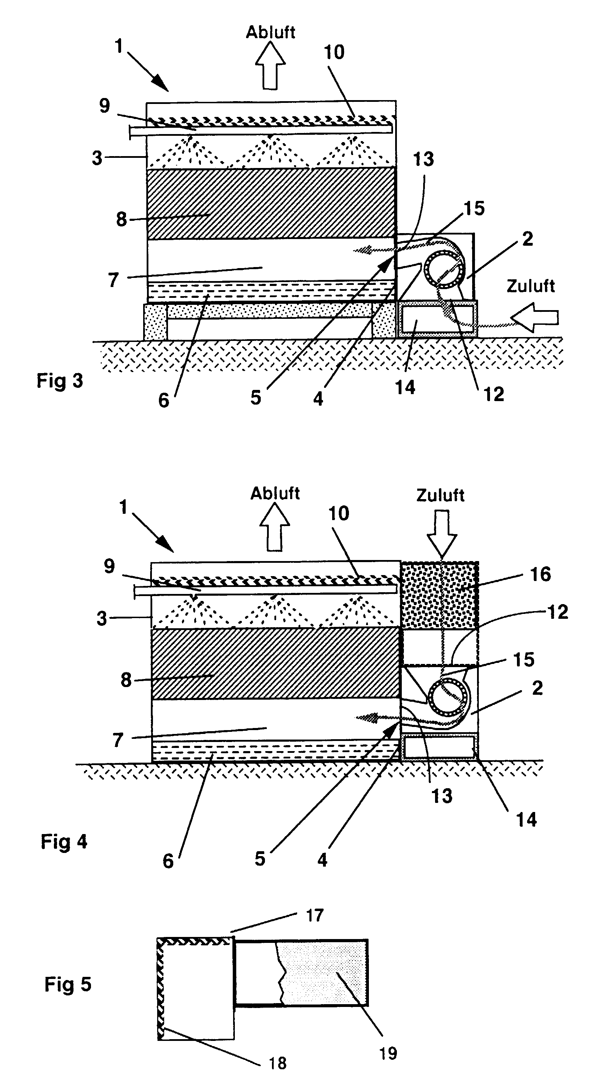

Die in Fig. 3 gezeigte Ausführungsform unterscheidet sich von jener nach Fig. 1 durch die Anordnung des Querstromventilators 2 am Gehäuse 3. Bei dieser Ausführungsform ist der Ventilator 2 mit der Eintrittsöffnung nach unten gerichtet auf einem Sockel montiert.

Bei der in Fig. 4 dargestellten Ausführungsform der Vorrichtung ist eine Schalldämpfereinrichtung 16 vorgesehen, die dem von oben ansaugenden Querstromventilator 2 vorgeschaltet ist. Anstelle der Schalldämpfereinrichtung 16 kann eine Schalldämpfereinheit bestehend aus einer Schallschluckhaube 17 und schallabsorbierenden Material 18 verwendet werden. Ferner kann die Kühlluft über Kanäle 19 zugeführt werden, die entweder an die Schalldämpfereinheit (Fig. 5) bzw. die Schalldämpfereinrichtung 13 oder direkt an die Lufteintrittsöffnung 12 des Ventilators 2 angeschlossen werden kann.

Die Vorrichtung hat ein aufrechtaufrechtstehendes Gehäuse mit einer Lufteinlassöffnung und einer Luftauslassöffnung und einen Ventilator, um Kühlluft in das Gehäuse einzublasen. Der Ventilator 2 ist an einer Seitenwand 4 befestigt und der Ventilator hat eine längliche Einrichtung 11, die radial von Luft durchströmt ist. Die Einrichtung 11 hat eine Längserstreckung, die mindestens 75 % der Länge der Seitenwand beträgt.

Durch verminderte Druckverluste im Eintrittsbereich von Kühlturm und Ventilator ist der Leistungsbedarf des Ventilators bei gleicher Luftmenge kleiner als bei Radialventilatoren mit axialer Einströmung.

## Patentansprüche

1. Vorrichtung zum Kühlen von Wasser im Gegenstrom, welche Vorrichtung ein aufrechtstehendes Gehäuse (3) mit einer Mehrzahl von Seitenwänden, einer Lufteinlassöffnung und einer Luftauslassöffnung und einen Querstromventilator mit einer Lufteintrittsöffnung und einer Luftaustrittsöffnung enthält, wobei der Ventilator einen länglichen Rotor aufweist, der radial von Luft durchströmt ist und eine Längserstreckung hat, die mindestens 75 % der Länge der Seitenwand beträgt , dadurch gekennzeichnet, daß der Ventilator (2) ausserhalb des Gehäuses (3) an einer Seitenwand (4) befestigt ist, um Kühlluft in das Gehäuse einzublasen.

2. Vorrichtung nach Anspruch 1, dadurch gekennzeichnet, dass die Ebene der Lufteintrittsöffnung des Ventilators (2) in einem Winkel von 90° zur Ebene der Lufteinlassöffnung des Gehäuses (3) angeordnet ist.

3. Vorrichtung nach Anspruch 2, dadurch gekennzeichnet, dass der Ventilator (2) mit der Lufteintrittsöffnung nach unten gerichtet angeordnet ist, wobei die Umlenkung der Luftströmung im Ventilator (2) ca. 270° beträgt.

4. Vorrichtung nach Anspruch 2, dadurch gekennzeichnet, dass der Ventilator (2) mit der Lufteintrittsöffnung nach oben gerichtet angeordnet ist, wobei die Umlenkung der Luftströmung im Ventilator ca. 270° beträgt.

5. Vorrichtung nach Anspruch 1, dadurch gekennzeichnet, dass die Ebene der Lufteintrittsöffnung des Ventilators parallel zur Ebene der Lufteinlassöffnung des Gehäuses angeordnet ist, wobei die Umlenkung der Luftströmung im Ventilator (2) ca. 180° beträgt.

6. Vorrichtung nach einem der Ansprüche 1 bis 5, dadurch gekennzeichnet, dass die Luftauslassöffnung des Gehäuses (3) nach oben oder seitwärts gerichtet ist.

7. Vorrichtung nach einem der Ansprüche 1 bis 5, gekennzeichnet durch mindestens einen Kanal (19), der an der Eintrittsöffnung des Ventilators angeschlossen ist, um Aussenluft anzusaugen.

8. Vorrichtung nach Anspruch 7, dadurch gekennzeichnet, dass der luftführende Kanal (19) mindestens teilweise mit schalldämpfenden Elementen versehen ist.

## Claims

1. An apparatus for cooling water in counter-flow, which apparatus contains an upright housing (3) with a plurality of side walls, an air inlet aperture and an air outlet aperture and a cross-flow fan with an air inlet aperture and an air outlet aperture, the fan comprising an oblong rotor through which air radially flows and which has a longitudinal extension which is at least 75% of the side wall,
**characterised in that** the fan (2) is fixed outside the housing (3) to a side wall (4) to blow cooling air into the housing.

2. An apparatus according to Claim 1,
**characterised in that** the plane of the air inlet aperture of the fan (2) is disposed at an angle of 90° to the plane of the air inlet aperture of the housing (3).

3. An apparatus according to Claim 2,
**characterised in that** the fan (2) with the air inlet aperture is disposed directed downwards, with the deflection of the air flow in the fan (2) being approx. 270°.

4. An apparatus according to Claim 2,
**characterised in that** the fan (2) with the air inlet aperture is disposed directed upwards, with the deflection of the air flow in the fan being approx. 270°.

5. An apparatus according to Claim 1,
**characterised in that** the plane of the air inlet aperture of the fan is disposed parallel to the plane of the air inlet aperture of the housing, with the deflection of the air flow in the fan (2) being approx. 180°.

6. An apparatus according to one of Claims 1 to 5,
**characterised in that** the air outlet aperture of the housing (3) is directed upwards or sideways.

7. An apparatus according to one of Claims 1 to 5,
**characterised by** at least one duct (19), which is connected to the inlet aperture of the fan to draw in outer air.

8. An apparatus according to Claim 7,
**characterised in that** the air-supplying duct (19) is provided at least partially with sound absorbing components.

## Revendications

1. Dispositif pour refroidir de l'eau à contre-courant, ce dispositif comportant une enceinte érigée (3) avec une pluralité de parois latérales, une ouverture d'entrée d'air et une ouverture de sortie d'air et un ventilateur de flux transversal avec une ouverture d'entrée d'air et une ouverture de sortie d'air, le ventilateur présentant un rotor oblong à travers lequel l'air passe radialement et qui a une étendue longitudinale qui représente au moins 75% de la longueur de la paroi latérale, caractérisé en ce que le ventilateur (2) est fixé à l'extérieur de l'enceinte (3) à une paroi latérale (4) pour souffler de l'air de refroidissement dans l'enceinte.

2. Dispositif selon la revendication 1, caractérisé en ce que le plan de l'ouverture d'entrée d'air du ventilateur (2) est disposé suivant un angle de 90° au plan de l'ouverture d'entrée d'air de l'enceinte (3).

3. Dispositif selon la revendication 2, caractérisé en ce que le ventilateur (2) est disposé avec l'ouverture d'entrée d'air orientée vers le bas, la déviation du flux d'air dans le ventilateur (2) étant environ de 270°.

4. Dispositif selon la revendication 2, caractérisé en ce que le ventilateur (2) est disposé avec l'ouverture d'entrée d'air orientée vers le haut, la déviation du flux d'air dans le ventilateur étant d'environ 270°.

5. Dispositif selon la revendication 1, caractérisé en ce que le plan de l'ouverture d'entrée d'air du ventilateur est disposé parallèlement au plan de l'ouverture d'entrée d'air de l'enceinte, la déviation du flux d'air dans le ventilateur (2) étant environ de 180°.

6. Dispositif selon l'une des revendications 1 à 5, caractérisé en ce que l'ouverture de sortie d'air du boîtier (3) est orientée vers le haut ou vers le côté.

7. Dispositif selon l'une des revendicatiosn 1 à 5, caractérisé par au moins un canal (19) qui est raccordé à l'ouverture d'entrée du ventilateur pour aspirer l'air extérieur.

8. Dispositif selon la revendication 7, caractérisé en ce que le canal de guidage d'air (19) est pourvu au moins partiellement d'éléments amortissant le son.
